# EUROPÄISCHE PATENTSCHRIFT

(11) **EP 2 425 917 B1**
(45) Veröffentlichungstag und Bekanntmachung des Hinweises auf die Patenterteilung: **28.08.2013**
(21) Anmeldenummer: 10175564.3
(22) Anmeldetag: 07.09.2010
(51) Int. Cl.: B23B 31/02, B23B 31/16, B23B 31/32

(54) **Membranspannfutter**
Diaphragm chuck
Mandrin à diaphragme

(43) Veröffentlichungstag der Anmeldung: 07.03.2012
(73) Patentinhaber: SMW-AUTOBLOK Spannsysteme GmbH, 88074 Meckenbeuren (DE)
(72) Erfinder: Blaser, Ralf, 88255 Baienfurt (DE); Maurer, Eckhard, 88094 Oberteuringen (DE)
(74) Vertreter: Engelhardt & Engelhardt

(56) Entgegenhaltungen:
- DE-A1- 10 207 144
- FR-A1- 2 861 000
- US-A- 2 568 585
- US-A- 2 933 320
- US-A- 4 067 586

## Beschreibung

Die Erfindung bezieht sich auf ein Membranspannfutter nach dem Oberbegriff des Patentanspruches 1.

Sowohl aus der EP 1 837 108 B1 als auch aus der EP 1 757 392 B1 sind derartige Membranspannfutter zu entnehmen. Die an dem Betätigungsglied angebrachte Membrane wird im Bereich ihrer Befestigung an dem Futterkörper nach außen gekippt, wodurch eine Verschwenkbewegung des an der Membrane befestigten Grundbackens radial nach außen erfolgt. Das Betätigungsglied ist beispielsweise als pneumatisch oder hydraulisch betriebener Kolben mit einer daran angebrachten Kolbenstange ausgebildet, die in Richtung auf das einzuspannende Werkstück bewegt ist, um die Grundbacken und die daran befestigten Spannbacken zu öffnen, so dass das Werkstück aus den Spannbacken entnommen bzw. ein neu zu bearbeitendes Werkstück zwischen die Spannbacken eingesetzt werden kann.

Solche Membranspannfutter haben sich in der Praxis zwar bewährt, weisen jedoch den Nachteil auf, dass für jedes zu bearbeitende Werkstück eine entsprechende Umgestaltung der Spannbacken und der Grundbacken an dem Futterkörper vorzunehmen ist, denn der radiale Hub der Spann- und Grundbacken beträgt lediglich einige wenige Millimeter, da die Membrane einen äußerst geringen Zustell- und Öffnungshub durchläuft. Insbesondere wenn Zahnräder in dem Membranspannfutter zu deren Bearbeitung einzuspannen sind, sind für jede geometrische Abmessung des jeweiligen Zahnrades unterschiedliche Grund- und Spannbackenanordnungen an den Futterkörper zu montieren. Wenn beispielsweise der Grundkreis des Zahnrades bei konstanter Teilung verkleinert oder vergrößert ist, kann das auf einen bestimmten Grundkreis ausgerichtete Spannbacken- /Grundbackenanordnungssystem nicht eingesetzt werden, da dann der Abstand zwischen den Spannbolzen und dem einzuspannenden Zahnrad zu groß oder zu klein ausfällt, so dass keine Spannkraft erzeugbar ist bzw. die Spannbolzen bereits zur Anlage an dem Zahnrad gelangen, bevor die Membrane in ihre Ausgangsposition zurück überführt ist, um die Spannkraft zu erzeugen.

Aus der US 2,568,585 A ist ein Membranspannfutter bekanntgeworden, durch das die Teilung der Spannbacken an dem Grundkörper an die Teilung der einzuspannenden Werkstücke angepasst werden kann.

Als nachteilig hat sich bei diesem Stand der Technik herausgestellt, dass die Anordnung der Spannbacken an dem Grundkörper nicht an jede beliebige Größe von Werkstücken angepasst werden kann.

Dies führt dazu, dass die Betriebe, die solche Membranspannfutter verwenden wollen, für nahezu jede beliebige Geometrie von zu bearbeitenden Zahnrädern, eine entsprechende Spannbacken- /Grundbackenbaueinheit benötigen, die geometrisch exakt auf das jeweilige zu bearbeitende Zahnrad angepasst ist.

Es ist daher Aufgabe der Erfindung, ein Membranspannfutter der eingangs genannten Gattung derart weiterzubilden, dass durch dieses unterschiedlich groß bemessene Zahnräder und Zahnräder mit einer unterschiedlichen Teilung der Zähnezahl zwischen den drei Spannbacken zuverlässig eingespannt werden können.

Diese Aufgabe ist erfindungsgemäß durch die Merkmale des kennzeichnenden Teiles von Patentanspruch 1 gelöst.

Weitere vorteilhafte Weiterbildungen der Erfindung ergeben sich aus den Unteransprüchen.

Dadurch, dass die in den Grundkörper und in den jeweiligen Spannbacken eingearbeitete Zentriemut mittels der einzusetzenden Passfeder, derart zueinander ausrichtbar sind, können die Abstände in Umfangsrichtung zwischen den drei Spannbacken an die geometrische Außenkontur des einzuspannenden Zahnrades sowie an die Teilung, also die Zähneanzahl des Zahnrades, angepasst werden, ohne dass die Spannbacken bzw. die Grundbacken auszutauschen sind. Die Baueinheit Spannbacke und Grundbacke kann demnach für die Zahnräder verwendet werden, die unterschiedliche Teilungen und die verschieden groß bemessene Grundkreise aufweisen, denn die Spannbacken können sowohl konzentrisch um den Mittelpunkt des Futterkörpers ausgerichtet werden, als auch der radiale Abstand zwischen den Köpfen der Spannbolzen ist in einem bestimmten Abmessungsbereich variabel einstellbar.

Darüber hinaus ist vorteilhaft, dass die Köpfe der Spannbolzen an die Geometrie der Zähne, insbesondere an die Geometrie von zwei benachbarten Zahnflanken von Zähnen, derart angepasst werden können, dass die Köpfe zwischen den beiden benachbarten Zahnflanken zur Anlage gelangen und somit das Zahnrad zuverlässig einspannen.

In der Zeichnung ist ein Ausführungsbeispiel eines erfindungsgemäßen Membranspannfutters dargestellt, das nachfolgend näher erläutert ist. Im Einzelnen zeigt:

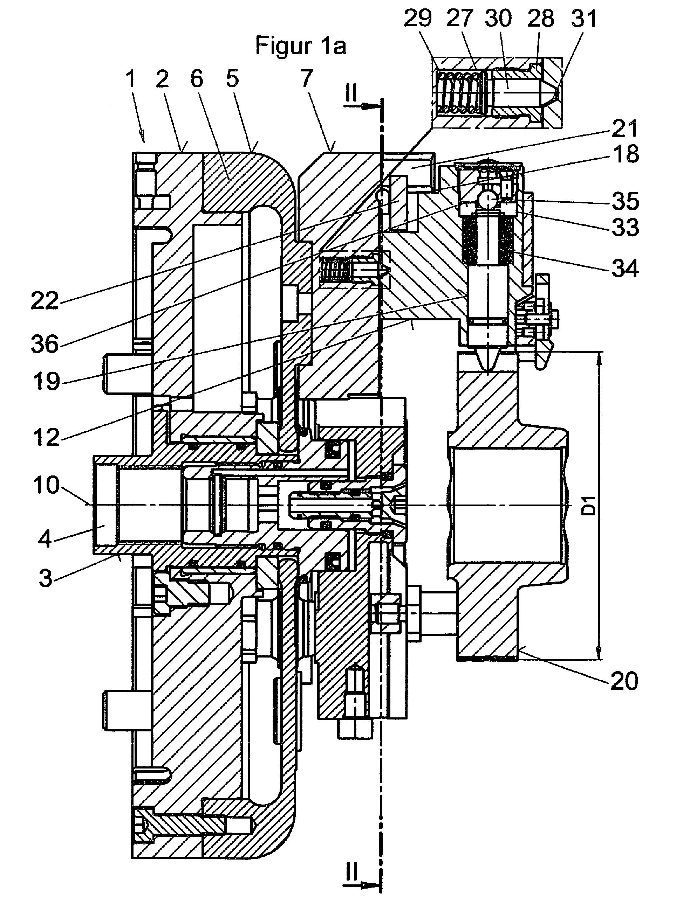

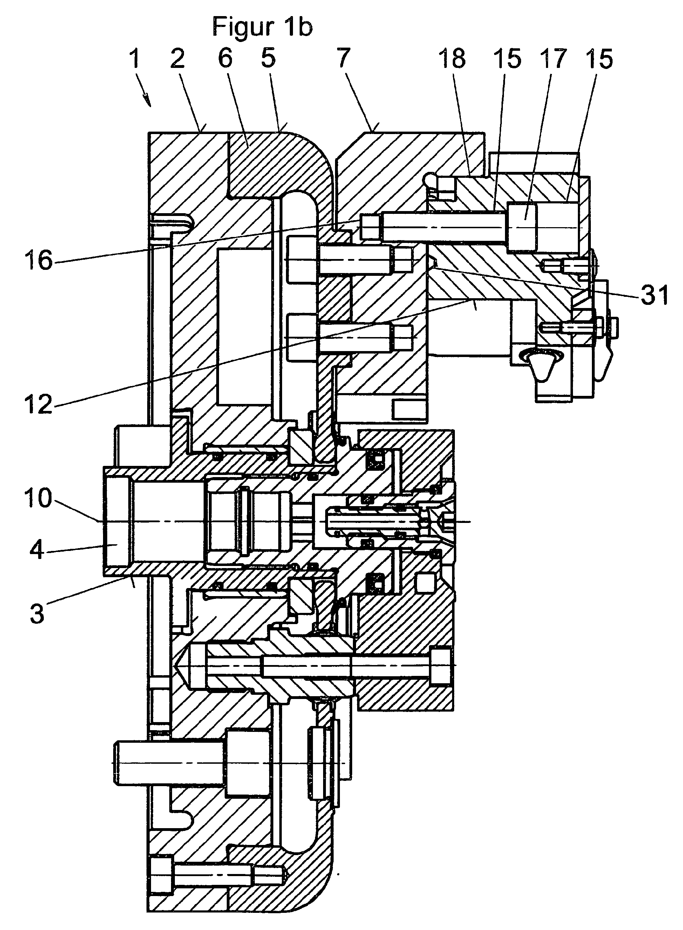

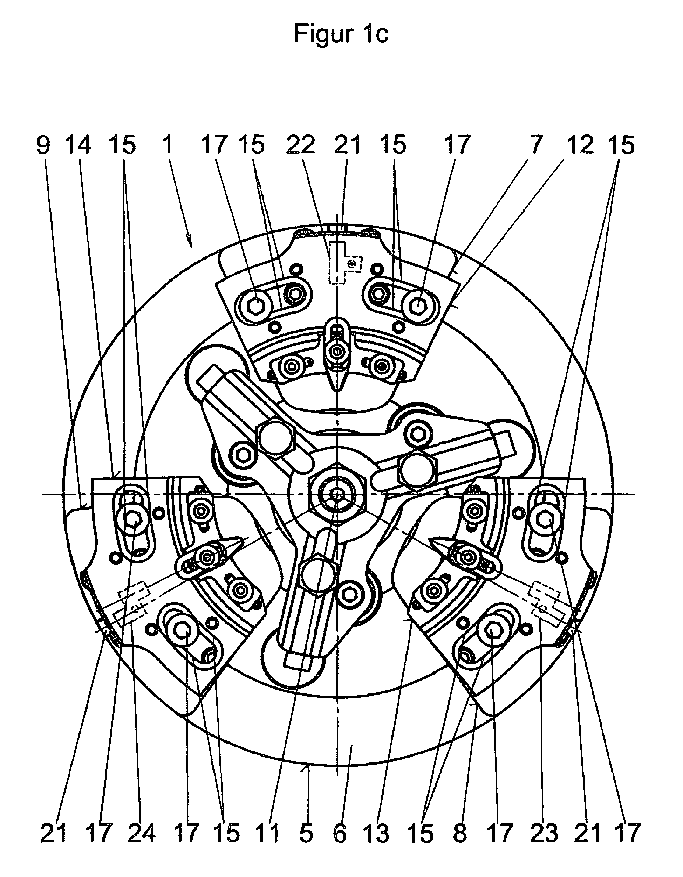

- Figur 1 a: ein Membranspannfutter mit einem Futterkörper, einem Betätigungsglied, an dessen freien Ende eine Membrane angebracht ist, sowie ein Grundbacken, der an der Membrane befestigt ist und ein an dem Grundbacken angebrachter Spannbacken zur Einspannung eines Zahnrades, im Schnitt,
- Figur 1 b: das Membranspannfutter gemäß Figur 1a, entlang einer parallel zu der Schnittlinie von Figur 1 a verlaufenden Schnittebene,
- Figur 1 c: das Membranspannfutter gemäß Figur 1 a und 1b, in Draufsicht,
- Figur 2: das Membranspannfutter gemäß Figur 1a entlang der Schnittlinie 11-11, mit einem einzuspannenden Zahnrad das 31 Zähne besitzt, in Draufsicht,
- Figur 3a, 3b und 3c: jeweils perspektivische Ansichten der Grundbacken und der Spannbacken gemäß Figur 1a, in die jeweils eine Zentriernut eingearbeitet ist, in die eine Passfeder mit unterschiedlichen Querschnittsformen zur Ausrichtung der Spannbacke an der Grundbacke eingesetzt ist,
- Figur 4: das Membranspannfutter gemäß Figur 1a, durch das ein unterschiedlich groß bemessenes Zahnrad eingespannt ist.
- Figur 5a: das Membranspannfutter gemäß Figur 1a, in das ein Zahnrad mit 32 Zähnen eingespannt ist,
- Figur 5b: das Membranspannfutter gemäß Figur 1a, in das ein Zahnrad mit 30 Zähnen eingesetzt ist und
- Figuren 6a, 6b, 6c: die an den Spannbacken radial nach innen abstehenden Spannbolzen mit unterschiedlich ausgestalteten Kopfkonturen, die zwischen zwei benachbarten Zähnen des einzuspannenden Zahnrades eingesetzt sind.

In den Figuren 1a, 1b und 1c ist ein Membranspannfutter 1 abgebildet, das einen Futterkörper 2 aufweist, in dem ein Betätigungsglied 3 zentrisch und axial verschiebbar gelagert ist. Das Betätigungsglied 3 kann beispielweise als hydraulisch oder pneumatisch betriebener Kolben ausgebildet sein, an dem eine Kolbenstange angebracht ist. Das Betätigungsglied 3 verläuft fluchtend zu der Achse 10 des Futterkörpers 2. Das freie Ende des Betätigungsgliedes 3 ist mit der Bezugsziffer 4 versehen, an dem eine Membrane 5 trieblich verbunden ist. Der äußere Umfang 6 der Membrane 5 ist an dem Futterkörper 2 befestigt, so dass die Hubbewegungen, also die axialen Verschiebungen des Betätigungsgliedes 3 parallel zur Achse 10 des Futterkörpers 2, eine Auslenkung der Membrane 5 verursachen.

An der Membrane 5 sind drei Grundbacken 7, 8 und 9 in einem Winkel von 120° zueinander befestigt, so dass die Auslenkungen der Membrane 5 dazu führen, dass die Grundbacken 7, 8 und 9 radial nach außen bzw. nach innen verschwenkt sind. An jedem der Grundbacken 7, 8 und 9 ist ein Spannbacken 12, 13 und 14 befestigt, wodurch gewährleistet ist, dass auch die drei Spannbacken 12, 13 und 14 die radialen Kippbewegungen der Grundbacken 7, 8 und 9 ausführen. Die Position der Spannbacken 12, 13 und 14 ist bezogen auf den jeweiligen Grundbacken 7, 8, 9 ― wie nachfolgend erläutert - variabel einstellbar.

Durch die Spannbacken 7, 8 und 9 soll ein Zahnrad 20 einzuspannen sein. Die Spannbacken 12, 13 und 14 sind in einem Winkel von etwa 120° zueinander ausgerichtet. Es ist jedoch auch denkbar, mehr als drei Spannbacken 12, 13 und 14 sowie mehr als drei Grundbacken 7, 8 und 9 an der Membrane 5 anzubringen.

Es ist erforderlich, dass die drei Spannbacken 12, 13 und 14 einen exakt gleich großen Abstand bezogen auf die Achse 10 des Futterkörpers 2 bzw. den mit der Bezugsziffer 11 gekennzeichneten Mittelpunkt des Futterkörpers 2 aufweisen, der fluchtend zum Mittelpunkt des einzuspannenden Zahnrades 20 verlaufen soll, um eine möglichst toleranzfreie Bearbeitung und Einspannung des Zahnrades 20 zu erreichen. Zu diesem Zweck ist an jedem der Grundbacken 7, 8 und 9 eine konzentrisch um den Mittelpunkt 11 umlaufende Zentrierfläche 18 angearbeitet, deren radialer Abstand bezogen auf die Achse 10 bzw. den Mittelpunkt 11 gleich groß bemessen ist. Die jeweilige Spannbacke 12, 13 oder 14 soll im montierten Zustand an der Zentrierfläche 18 anliegen und in radialer Richtung von dieser in Form eines Anschlages gehalten sein, so dass der radiale Abstand der drei Spannbacken 12, 13 und 14 bezogen auf die Achse 10 bzw. den Mittelpunkt 11 ebenfalls gleich groß bemessen ist.

Um dies zu erreichen, ist in jede der Grundbacken 7, 8 und 9 eine Bohrung 27, eine Rastführung 28, eine Druckfeder 29 und ein Raststift 30 eingesetzt. Mittels der Druckfeder 29 wird der Raststift 30 aus der Grundbacke 7, 8 oder 9 herausgedrückt, so dass der Raststift 30 aus der von der jeweiligen Grundbacke 7, 8 oder 9 gebildeten Ebene herausragt. In den jeweiligen Spannbacken 12, 13 oder 14 ist eine keilförmige oder pyramidenförmige Nut 31 eingearbeitet, die fluchtend zu dem Raststift 30 auszurichten ist. Der Raststift 30 ragt in die jeweilige Nut 31. Aufgrund der schrägen Ebene der Nut 31 entsteht eine Kraftkomponente, die radial nach außen verläuft und durch die der jeweilige Spannbacken 12, 13 oder 14 in Richtung auf die Zentrierfläche 18 des jeweiligen Grundbackens 7, 8 oder 9 gedrückt ist, so dass die Spannbacken 12, 13 oder 14 an der Zentrierfläche 18 anliegen.

In jedem der Spannbacken 12, 13 und 14 ist ein konzentrisch oder kreisbogenförmig um den Mittelpunkt 11 ausgerichtetes Langloch 15 eingearbeitet, durch das eine Befestigungsschraube 17 eingesetzt ist. In den jeweiligen Grundbacken 7, 8 oder 9 ist eine oder mehrere Gewindebohrungen 16 vorgesehen, so dass der Spannbacken 12, 13 oder 14 mittels der Befestigungsschraube 17 in der Gewindebohrung 16 des Grundbackens 7, 8 oder 9 gehalten ist.

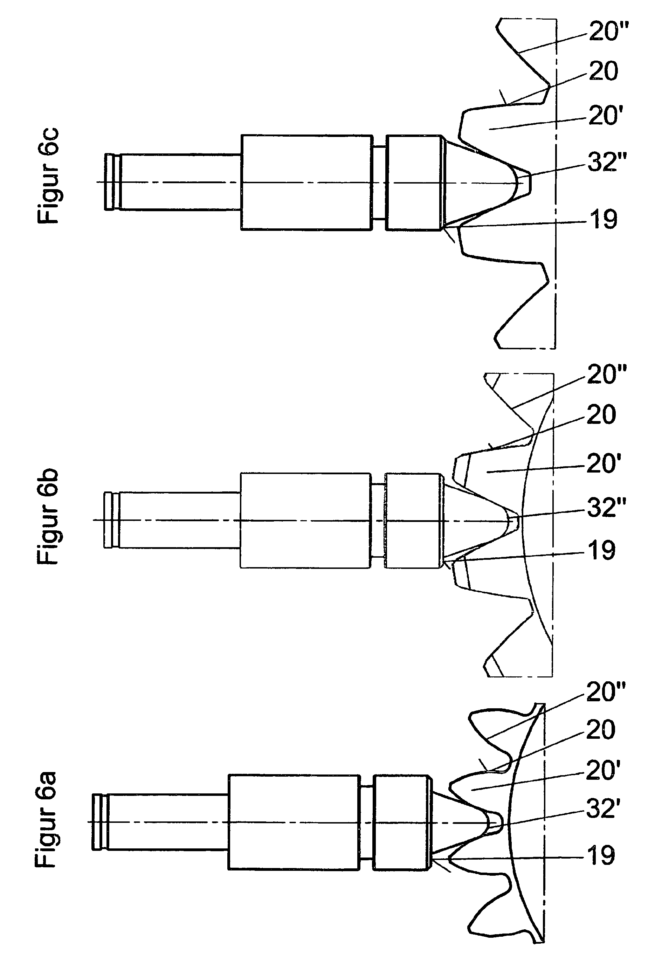

Jeder der Spannbacken 12, 13 und 14 weist eine radial verlaufende Durchgangsbohrung 33 auf, in die ein Spannbolzen 19 eingesetzt ist. Der Kopf 32', 32'' des Spannbolzens 19 ist zwischen zwei Zähnen 20' des Zahnrades 20 angeordnet. Dies kann insbesondere den Figuren 6a, 6b und 6c entnommen werden. Die Außenkontur des Kopfes 32', 32'' ist an die Abstände der Zähne 20' angepasst, so dass der Kopf 32', 32'' an den Zahnflanken 20" des Zahnrades 20 im eingespannten Zustand anliegt.

Darüber hinaus kann der radiale Abstand des Kopfes 32', 32'' des jeweiligen Spannbolzens 19 mittels eines in die Durchgangsbohrung 33 eingedrehten Einstellschraube 36 verändert werden, denn die Einstellschraube 36 drückt eine Kugel 35 gegen die Stirnseite des Spannbolzens 19, so dass dieser entgegen der Kraft einer zwischen der Einstellschraube 36 und dem Spannbolzen 19 eingesetzten Druckfeder 34 bewegt werden kann. Die Einstellschraube 36, die Kugel 35 und der Spannbolzen 19 bilden eine gemeinsame Baueinheit, so dass beim Eindrehen der Einstellschraube 36 der Spannbolzen 19 aus den Spannbacken 12, 13 oder 14 herausgedrückt ist und beim Hinausdrehen der Einstellschraube 36 der Spannbolzen 19 in Richtung der Spannbacken 12, 13 oder 14 eingefahren ist.

Aufgrund der radialen Einstellungsmöglichkeiten der Spannbolzen 19 können unter schiedlich groß bemessene Zahnräder 20 zwischen den drei Spannbolzen 19 eingesetzt werden.

Üblicherweise wird durch das Betätigungsglied 3 die Membrane 5 ausgelenkt; das Betätigungsglied 3 wird also in Richtung des einzuspannenden Zahnrades 20 bewegt. Die Hubbewegung des Betätigungsgliedes 3 beträgt etwa 1 mm, wodurch die Membrane 5 in etwa um den gleichen Verschwenkweg ausgelenkt ist. Durch die Bewegung der Membrane 5 verstellen sich die Spannbacken 12, 13 und 14 sowie die Grundbacken 7, 8 und 9 in radialer Richtung, so dass der radiale Abstand zwischen den Köpfen 32', 32'' der Spannbolzen 19 vergrößert ist. Ein zu bearbeitendes Zahnrad 20 kann dann in entsprechender Weise eingesetzt werden. Der Bediener hat nunmehr das Membranspannfutter 1 derart einzustellen, dass zunächst das Betätigungsglied 3 in Richtung der Ausgangsposition zurückbewegt wird. Nach einem Hubweg von etwa 0,8 mm sollten dabei die Köpfe 32', 32'' der Spannbolzen 19 das einzuspannende Zahnrad 20 exakt zentrisch fixieren, so dass der Mittelpunkt des Zahnrades 20 und die Achse 10 zueinander fluchtend verlaufen. Der restliche Hubweg von 0,2 mm wird benötigt, damit die Membrane 5 eine entsprechende Vorspannkraft erzeugt, durch die die Spannkraft der Spannbolzen 19 erzeugt ist. Zusätzlich kann auch das Betätigungsglied 3 aktiv weiter nach hinten gedrückt oder bewegt werden, so dass hierüber zusätzlich eine Spannkraft über die Spannbolzen 19 auf das Zahnrad 20 einwirkt. Um diese Einstellungsposition bzw. Spannposition zu finden, sind die Einstellschraube 36 der Spannbolzen 19 zu verändern.

Da die zu bearbeitenden Zahnräder 20 selbst bei gleichbleibendem Grundkreisdurchmesser verschiedene Zahl von Zähnen aufweisen können, die als Teilung (T) bezeichnet ist, ist es erforderlich, die konzentrische Position der Spannbacken 12, 13 und 14 bezogen auf den Mittelpunkt 11 ausrichten zu können, um dadurch zu erreichen, dass die drei Spannbolzen 19 zwischen zwei Zähnen 20' eingreifen.

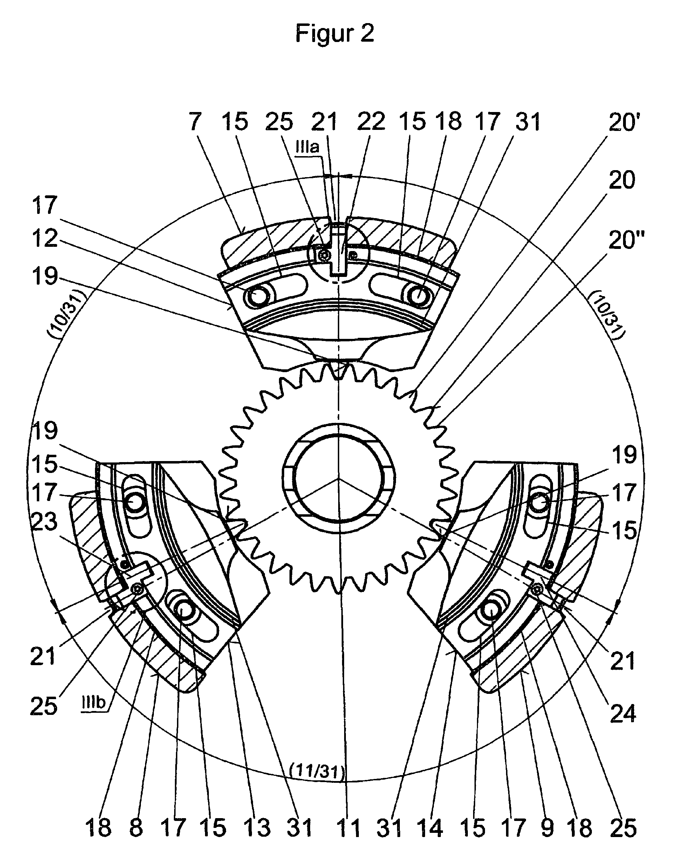

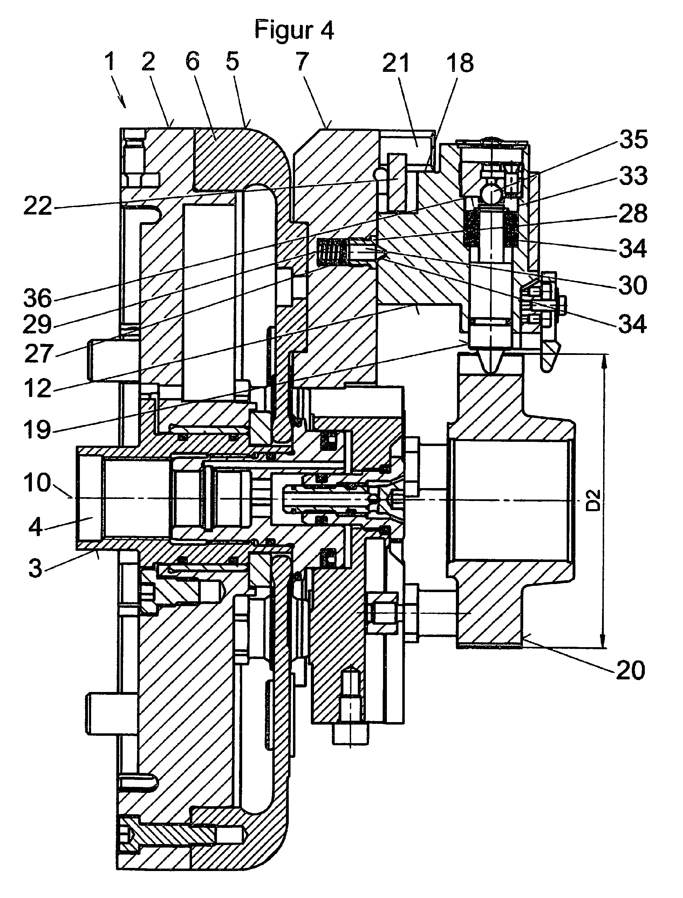

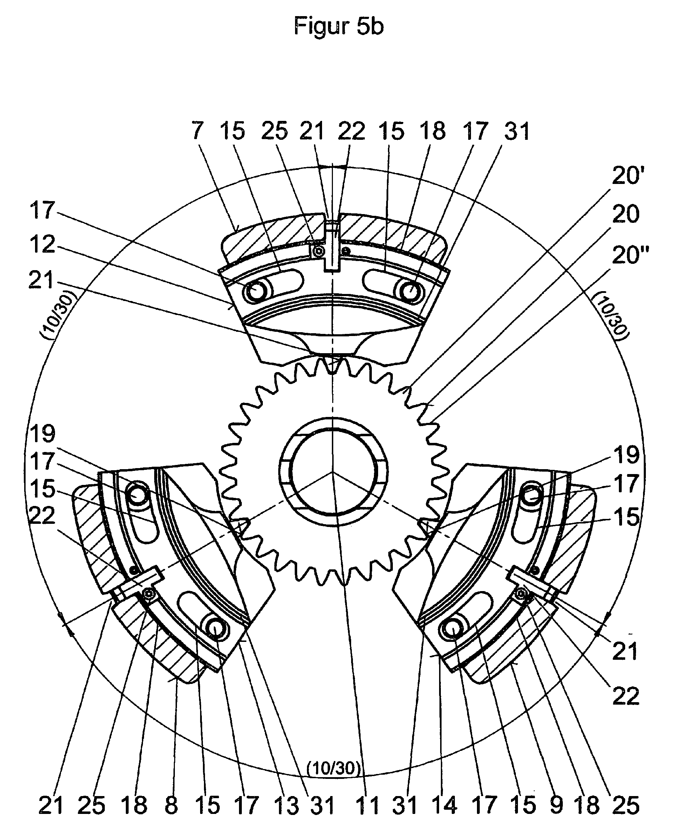

Insbesondere den Figuren 2, 3a, 3b, 3c, 4, 5a und 5b ist die Positionierung der Spannbacken 12, 13 und 14 bezogen auf die unterschiedliche Teilung (T) der zu bearbeitenden Zahnräder 20 zu entnehmen. In jeden der Grundbacken 7, 8 und 9 ist eine Zentriernut 21 eingearbeitet; in jeden der Spannbacken 12, 13 und 14 ist ebenso eine Zentriernut 21 vorgesehen. Ist beispielsweise die Teilung (T) durch den Faktor 3 teilbar, dann sind die Zentriernuten 21 der Grundbacken 7, 8 und 9 und der Spannbacken 12, 13 und 14 exakt fluchtend zueinander auszurichten. Mit Hilfe von drei Passfedern 22, 23 und 24 kann die fluchtende Anordnung der Zentriernuten 21 der Grundbacken 7, 8 und 9 und der Spannbacken 12, 13 und 14 erreicht werden. Dies ist in Figur 5b dargestellt. Die drei Passfedern 22 sind in ihrem Querschnitt T-förmig ausgestaltet. Die Passfedern 22 der Spannbacken 13 und 14 sind spiegelbildlich versetzt zueinander ausgerichtet.

Jede der Passfedern 22, 23 und 24 ist mittels einer Schraube 25 in einer in den jeweiligen Grundbacken 7, 8 oder 9 eingearbeiteten Gewindebohrung 26 gehalten. Soll nunmehr ein Zahnrad 20 mit beispielsweise einer Zähnezahl von 31 einzuspannen sein, kann die Spannbacke 12 nach wie vor mit einer T-förmigen Passfeder 22 an der Grundbacke 7 befestigt werden. Die Zähnezahl zwischen der Spannbacke 12 und der Spannbacke 13 soll 10 betragen, so dass die Spannbacke 13 aus der in Figur 2 gezeigten Position in Richtung der Spannbacke 12 zu verschieben ist. Die Passfeder 23 ist nunmehr in ihrem Querschnitt S-förmig ausgestaltet, so dass die Zentriernuten 21 in der Grundbacke 8 seitlich versetzt zu der Zentriernut 21 der Spannbacke 13 ausgereichtet ist.

Zwischen der Spannbacke 13 und der Spannbacke 14 sollen 11 der insgesamt 31 Zähne 20' des Zahnrades 20 angeordnet sein, so dass die Spannbacke 14 von der Spannbacke 13 weiter weg zu beabstanden ist. Dies wird dadurch erreicht, dass in die Zentriernut 21 der Grundbacke 9 und der Spannbacke 14 eine S-förmige Passfeder 24 eingesetzt ist, die spiegelbildlich versetzt zu der Passfeder 23 angeordnet ist. Somit sind zwischen der Spannbacke 12 und der Spannbacke 13 bzw. der Spannbacke 14 zehn der insgesamt 31 Zähne 20' und zwischen den Spannbacken 13 und 14 elf der insgesamt 31 Zähne 20' vorgesehen. Dies zeigt Figur 2.

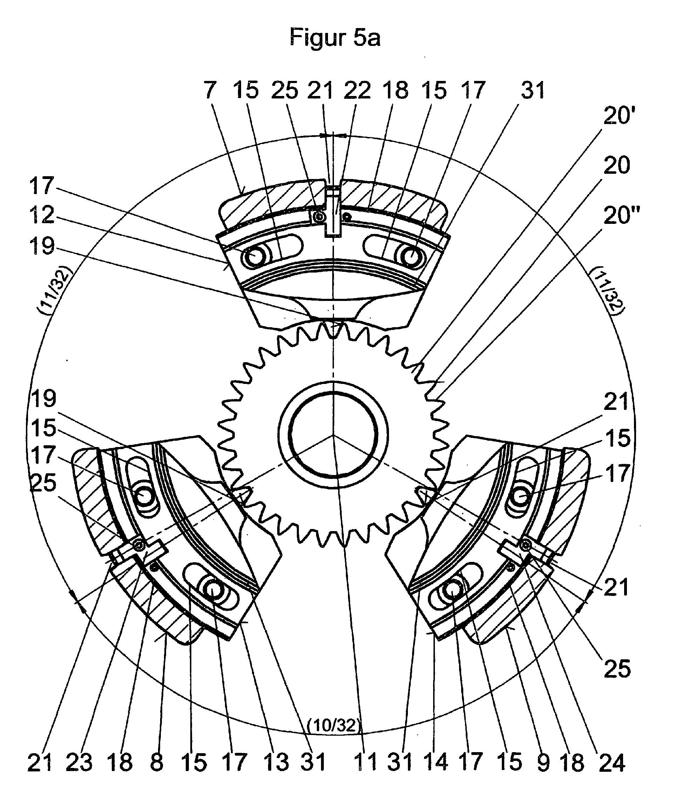

Soll ein Zahnrad 20 mit 32 Zähnen 20' an dem Membranspannfutter 1 eingespannt werden, sind die Positionen der Spannbacken 13 und 14 derart zu verändern, dass der Abstand zwischen der Spannbacke 12 und der Spannbacke 13 bzw. zwischen der Spannbacke 12 und der Spannbacke 14 auf insgesamt elf der 32 Zähne 20' vergrößert ist und dass somit zwischen den beiden benachbarten Spannbacken 13 und 14 zehn der insgesamt 32 Zähne 20' angeordnet sind. Aus Figur 5a ist ersichtlich, dass die Passfedern 23 und 24 S-förmig ausgestaltet sind und spiegelbildlich zueinander versetzt sind. Der in der Zentriernut 21 der Grundbacke 8 eingetauchte Schenkel der Passfeder 23 und der in der Zentriernut 21 der Spannbacke 14 eingreifende Schenkel der Passfeder 24 sind dabei einander zugewandt.

Mit Hilfe der T-förmigen bzw. S-förmigen Querschnittsform der Passfedern 22, 23 und 24 kann somit die konzentrische Position der Spannbacken 12, 13 und 14 an die Teilung (T) des jeweils einzuspannenden Zahnrades 20 angepasst sein.

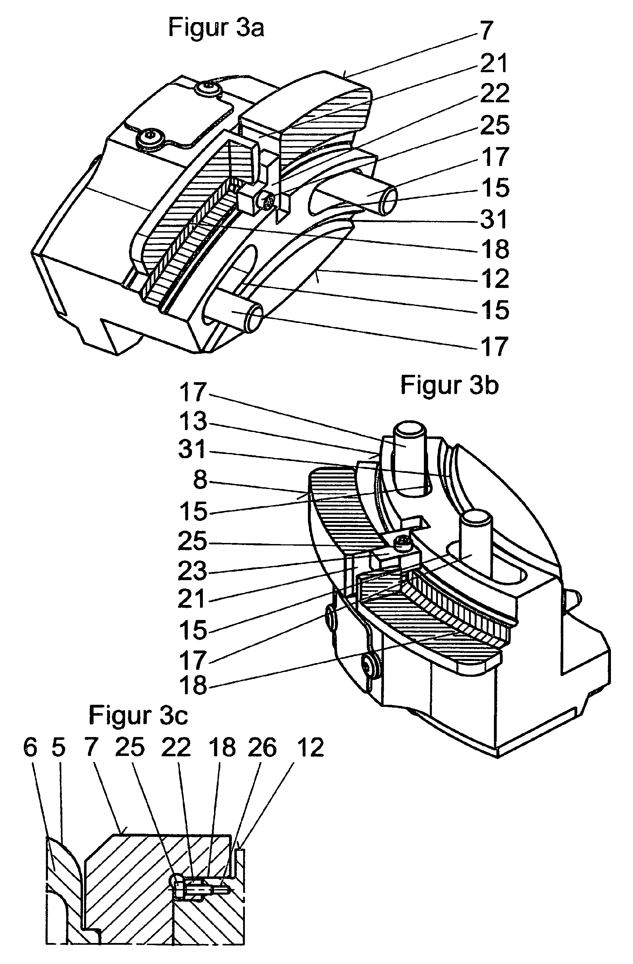

Insbesondere aus den Figuren 3a, 3b und 3c ist die Anordnung der jeweiligen Passfedern 22, 23 in der Grundbacke 7, 8 bzw. der Spannbacke 12, 13 zu entnehmen.

## Patentansprüche

1. Membranspannfutter (1) mit in einem Futterkörper (2) eingesetzten und axial verschiebbar zu diesem gelagerten Betätigungsglied (3), an dessen freien Ende (4) eine Membrane (5) angebracht ist, die mit ihrem äußeren Umfang (6) an dem Futterkörper (2) befestigt ist,
- mit drei mit der Membrane (5) trieblich verbundenen Grundbacken (7, 8, 9), an denen jeweils eine konzentrisch um die Achse (10) des Betätigungsgliedes (3) ausgerichtete Zentrierfläche (18) angearbeitet ist,
- mit drei auf dem jeweiligen Grundbacken (7, 8, 9) zu befestigende Spannbacken (12, 13, 14), durch die ein zu bearbeitendes Zahnrad (20) einspannbar ist und die an der Zentrierfläche (18) anliegen,
- mit jeweils einem den Spannbacken (12, 13, 14) zugeordneten Spannbolzen (19), die radial ausgerichtet und zwischen zwei Zähnen (20') des Zahnrades (20) im Spannzustand angeordnet sind,
- mit einer in den Grundbacken (7, 8, 9) und in der jeweiligen Spannbacke (12, 13, 14) eingearbeiteten Zentriemut (21),
- mit einer in jede Zentriemut (21) eingesetzten Passfeder (22, 23, 24)
- wobei die Querschnittsform und die Anordnung der Passfeder (22, 23, 24) an die Teilung (T) des einzuspannenden Zahnrades (20) derart angepasst ist, dass die Position der jeweiligen Spannbacke (12, 13, 14) durch die jeweilige Passfeder (22, 23, 24) bezogen auf die vorgegebene Anordnung der Zentriemut (21) in der Grundbacke (7, 8, 9) konzentrisch zu dem Mittelpunkt / (11) des Zahnrades (20) veränderbar ist,
**dadurch gekennzeichnet,**
**dass** eine der drei Passfedem (22) im Querschnitt T-förmig und die beiden anderen Passfedem (23, 24) in ihrem Querschnitt S-förmig ausgestaltet sind, dass die beiden S-förmigen Passfedem (23, 24) im eingesetzten Zustand spiegelbildlich versetzt zueinander in den Zentriernuten (21) der Grundbacke (7, 8, 9) und der Spannbacken (12, 13, 14) eingesetzt sind und/oder dass die drei Passfedern (22, 23, 24) in ihrem Querschnitt T-förmig ausgestaltet sind und dass zwei der drei benachbarten Passfedem (23, 24) spiegelbildlich zueinander versetzt in den Zentriernuten (21) der Grundbacke (7, 8, 9) und der Spannbacken (12, 13, 14) angeordnet sind.

2. Membranspannfutter nach Anspruch 1,
**dadurch gekennzeichnet,**
**dass** jede der Passfedern (22, 23, 24) mittels einer Schraube (25) in einer in der Grundbacke (7, 8, 9) eingearbeiteten Gewindebohrung (26) befestigt ist.

3. Membranspannfutter nach Anspruch 1 oder 2,
**dadurch gekennzeichnet,**
**dass** in die drei Spannbacken (12, 13, 14) jeweils mindestens ein Langloch (15) eingearbeitet ist, das konzentrisch oder kreisbogenförmig um den Mittelpunkt (11) des Futterkörpers (2) verläuft und das von einer Befestigungsschraube (17) durchgriffen ist, die in einer in dem jeweiligen Grundbacken (7, 8, 9) eingearbeiteten Gewindebohrung (16) gehalten ist.

4. Membranspannfutter nach Anspruch 3,
**dadurch gekennzeichnet,**
**dass** die Spannbacken (12, 13, 14) jeweils unabhängig voneinander in ihrer Position konzentrisch um den Mittelpunkt (11) des Futterkörpers (2) im Einstellungszustand verschiebbar sind und dass durch die jeweilige Passfeder (22, 23, 24) eine Zentrierung der jeweiligen Spannbacke (12, 13, 14) in Umfangsrichtung ermöglicht ist.

5. Membranspannfutter nach einem der vorgenannten Ansprüche,
**dadurch gekennzeichnet,**
**dass** die radialen Abstände der drei auf den Mittelpunkt (11) des Futterkörpers (2) ragende Spannbolzen (19) an den Grundkreis des einzuspannenden Zahnrades (20) derart anpassbar sind, dass durch die Bewegung der Membrane (5) im Spannzustand eine Vorspannkraft erzeugt ist, durch die das Zahnrad (20) zwischen den drei Spannbolzen (19) arretiert ist.

6. Membranspannfutter nach einem der vorgenannten Ansprüche,
**dadurch gekennzeichnet,**
**dass** in den jeweiligen Grundbacken (7, 8, 9) eine Bohrung (27) eingearbeitet ist, in die eine Rastführung (28) eingesetzt ist und dass in die Rastführung (28) ein Raststift (30) angeordnet ist, der mittels einer Druckfeder (34) in Richtung auf den jeweiligen Spannbacken (12, 13, 14) gedrückt ist und dass in den Spannbacken (12, 13, 14) eine zu dem jeweiligen Raststift (30) fluchtend verlaufende Nut (31) eingearbeitet ist, durch die eine Kraftkomponente, die radial nach außen wirkt, erzeugt ist, um den Spannbacken (12, 13, 14) gegen die Zentrierfläche (18) des jeweiligen Grundbackens (7, 8, 9) zu verschieben.

7. Membranspannfutter nach einem der vorgenannten Ansprüche,
**dadurch gekennzeichnet,**
**dass** der Kopf (32) des Spannbolzens (19) an die Innenkontur der jeweiligen Zahnflanken (20") des einzuspannenden Zahnrades (20) angepasst ist und dass der Kopf (32) des Spannbolzens (19) an zwei benachbarten Zahnflanken (20") im eingespannten Zustand anliegt.

## Claims

1. A diaphragm chuck (1) with an operating element (3) inserted in a chuck body (2) and axially movable in relation to this chuck body (2), with a diaphragm (5) attached to the free end (4) of the operating element (3) and with the diaphragm (5) secured to the chuck body (2) by its outer circumference (6),
- with three base jaws (7, 8, 9) in a driving connection with the diaphragm (5), on each of which a centring surface (18) is worked in a concentric alignment with the axis (10) of the operating element (3),
- with three clamping jaws (12, 13, 14) to be attached to the corresponding base jaws (7, 8, 9), by means of which a gear (20) to be machined can be clamped and which make contact with the centring surface (18),
- with clamping pins (19), each of which is allocated to one of the clamping jaws (12, 13, 14), that are radially aligned and arranged between two teeth (20') of the gear (20) in the clamped condition,
- with a centring groove (21) worked into the base jaws (7, 8, 9) and in the corresponding clamping jaw (12, 13, 14),
- with a key (22, 23, 24) inserted into each centring groove (21),
- in which the cross-sectional shape and the arrangement of the key (22, 23, 24) adapted to the pitch (T) of the gear (20) to be clamped in such a way that the position of the corresponding clamping jaw (12, 13, 14) can be changed by the corresponding key (22, 23, 24) in relation to the specified arrangement of the centring groove (21) in the base jaw (7, 8, 9) concentrically to the middle point (11) of the gear (20),
**characterised in that,**
one of the three keys (22) has a T-shaped cross section and the two other keys (23, 24) have an S-shaped cross section, that the two S-shape keys (23, 24) are inserted into the centring grooves (21) of the base jaw (7, 8, 9) and the clamping jaws (12, 13, 14) in a mirror-image offset arrangement in relation to one another and/or that the three keys (22, 23, 24) have a T-shaped cross section and that two of the three adjacent keys (23, 24) arse inserted into the centring grooves (21) of the base jaw (7, 8, 9) and the clamping jaws (12, 13, 14) in a mirror-image offset arrangement in relation to one another.

2. The diaphragm chuck in accordance with Claim 1,
**characterised in that,**
each of the keys (22, 23, 24) is attached by means of a screw (25) in a threaded hole (26) worked into the base jaw (7, 8, 9).

3. The diaphragm chuck in accordance with Claim 1 or 2,
**characterised in that,**
at least one slot (15) is worked into the three clamping jaws (12, 13, 14), with the slot (15) running concentrically or in an arc shape about the middle point (11) of the chuck (2) and a fastening screw (17) passes through it, with the screw (17) held in a threaded hole (16) worked into the corresponding base jaws (7, 8, 9).

4. The diaphragm chuck in accordance with Claim 3,
**characterised in that,**
the clamping jaws (12, 13, 14) can each be moved independently of one another in their position concentrically about the middle point (11) of the chuck (2) in the setting status, and that the corresponding key (22, 23, 24) allows centring of the corresponding clamping jaw (12, 13, 14) in the circumferential direction.

5. The diaphragm chuck in accordance with one of the aforementioned claim,
**characterised in that,**
the radial distances of the three clasping pins (19) protecting towards the middle point (11) of the chuck body (2) are adapted to the base circle of the gear (20) to be clamped in such a way that movement of the diaphragm (5) generates a pre-clamping force in the clamping status, by means of which the gear (20) is locked between the three clamping pins (19).

6. The diaphragm chuck in accordance with one of the aforementioned claims,
**characterised in that,**
a hole (27) with a detent guide (28) inserted in it is worked into the corresponding base jaws (7, 8, 9) and that a detent pin (30) is arranged in the detent guide (28), with the detent pin (30) being pressed in the direction of the corresponding clamping jaws (12, 13, 14) by means of a compression spring (34) and that a groove (31) running in alignment with the corresponding detent pin (30) is worked into the clamping jaws (12, 13, 14), by means of which a force component acting radially outwards is generated in order to push the clamping jaws (12, 13, 14) against the centring surface (18) of the corresponding base jaw (7, 8, 9).

7. The diaphragm chuck in accordance with one of the aforementioned claims,
**characterised in that,**
the head (32) of the clamping pin (19) is adapted to the inner contour of the corresponding tooth flanks (20") of the gear (20) to be clamped, and that the head (32) of the clamping pin (19) makes contact with two adjacent tooth flanks (20") in the clamped condition.

## Revendications

1. Mandrin à diaphragme (1) avec un élément d'actionnement (3) inséré dans un corps de mandrin (2) et logé axialement déplaçable par rapport à celui-ci, sur l'extrémité (4) duquel il est prévu une diaphragme (5) fixé avec son pourtour (6) sur le corps du mandrin (2)
- avec trois mors de base (7, 8, 9) liés par entraînement avec le diaphragme (5) sur lesquels il est pratiqué respectivement une face de centrage (18) alignée de manière concentrique par rapport à l'axe (10) de l'élément d'actionnement (3),
- avec trois mors de serrage (12, 13, 14) à fixer sur le mors de base respectif (7, 8, 9), qui permettent le serrage d'une roue dentée à usiner (20) et qui portent sur la face de centrage (18),
- avec respectivement un boulon de serrage (19) assigné à un des mors de serrage (12, 13, 14) et, en état serré, arrangé radialement et entre les dents (20') de la roue dentée (20),
- avec une gorge de centrage (21) pratiquée dans les mors de base (7, 8, 9) et dans le mors de serrage respectif (12, 13, 14),
- avec une clavette ajustée (22, 23, 24) insérée dans chaque gorge de centrage (21),
- où la section transversale et l'arrangement de la clavette ajustée (22, 23, 24) sont adaptés à la division (T) de la roue dentée serrée (20) de sorte que, référée à l'arrangement donné de la gorge de centrage (21) dans le mors de base (7, 8, 9), la position du mors de serrage respectif (12, 13, 14) se laisse varier par la clavette ajustée respective (22, 23, 24), de manière concentrique par rapport au centre (11) de la roue dentée (20),
**caractérisé en ce**
**qu'**une des trois clavettes ajustées (22) a la section transversale en forme de T et les deux autres clavettes ajustées (23, 24) ont la section transversale en forme d'un S, qu'en état monté, les deux clavettes ajustées en forme d'un S (23, 24) se trouvent renversées l'une par rapport à l'autre dans les gorges de centrage (21) du mors de base (7, 8, 9) et des mors de serrage (12, 13, 14) et/ou que les trois clavettes ajustées (22, 23, 24) ont la section transversale en T et où deux des trois clavettes ajustées voisines (23, 24) se trouvent renversées l'une par rapport à l'autre dans les gorges de centrage (21) du mors de base (7, 8, 9) et des mors de serrage (12, 13, 14).

2. Mandrin à diaphragme d'après la revendication 1,
**caractérisé en ce que**
chacune des clavettes ajustées (22, 23, 24) est fixée par une vis (25) dans un taraudage (26) pratiqué dans le mors de base (7, 8, 9),

3. Mandrin à diaphragme d'après une des revendications 1 ou 2,
**caractérisé en ce que**
dans les trois mors de serrage (12, 13, 14), il est pratiqué au moins un trou oblong (15) concentrique ou en arc de cercle autour du centre (11) du corps de mandrin (2), qui est traversé par une vis de fixation (17) retenue dans un taraudage (16) pratiqué dans le mors de base respectif (7, 8, 9).

4. Mandrin à diaphragme d'après la revendication 3,
**caractérisé en ce que**,
indépendamment l'un de l'autre, les mors de serrage (12, 13, 14) se laissent déplacer de manière concentrique autour du centre (11) du corps de mandrin (2), et que la clavette ajustée respective (22, 23, 24) permet un centrage du mors de serrage respectif (12, 13, 14) en direction du pourtour.

5. Mandrin à diaphragme d'après une des revendications précédentes,
**caractérisé en ce que**
les distances radiales des trois boulons de serrage (19) saillant vers le centre (11) du corps de mandrin (2) se laissent adapter au cercle de base de la roue dentée serrée (20) de sorte qu'au serrage, le mouvement du diaphragme (5) crée une force de tarage permettant de positionner la roue dentée (20) entre les trois boulons de serrage (19).

6. Mandrin à diaphragme d'après une des revendications précédentes,
**caractérisé en ce que**
dans les mors de base respectifs (7, 8, 9), il est pratiqué un alésage (27) dans lequel il est inséré un guide de crantage (28) et que dans le guide de crantage (28), il est arrangé un goujon de crantage (30) qui, moyennant un ressort de pression (34), est pressé en direction du mors de serrage respectif (12, 13, 14), et que dans les mors de serrage (12, 13, 14), il est pratiqué une gorge (31) en alignement précis avec le goujon de crantage respectif (30) qui crée une composante de force agissant radicalement vers l'extérieur pour déplacer les mors de serrage (12, 13, 14) vers la face de centrage (18) du mors de base respectif (7, 8, 9).

7. Mandrin à diaphragme d'après une des revendications précédentes,
**caractérisé en ce que**
la tête (32) du boulon de serrage (19) et adaptée au contour intérieur des flancs de dent respectifs (20") de la roue dentée serrée (20) et qu'en état serré, la tête (32) du bouton de serrage (19) porte sur deux flancs de dents voisins (20").
